# EUROPEAN PATENT APPLICATION

(11) **EP 4 715 545 A1**
(43) Date of publication of application: **25.03.2026**
(21) Application number: 24806586.4
(22) Date of filing: 14.05.2024
(51) Int. Cl.: G06F 3/0481, G06F 16/9535, G06F 16/9538

(54) **COMMODITY SEARCH METHOD AND APPARATUS, DEVICE, AND STORAGE MEDIUM**

(30) Priority: 15.05.2023 CN 202310544844
(71) Applicant: BEIJING YOUZHUJU NETWORK TECHNOLOGY CO. LTD., Beijing 101299 (CN)
(72) Inventor: SONG, Jie, Beijing 100028 (CN)
(74) Representative: Isarpatent
(86) International application number: PCT/CN2024/093236
(87) International publication number: WO 2024/235236

(57) **Abstract**

Embodiments of the disclosure relates to a method, an apparatus, a device, and a storage medium for commodity searching. The method provided by the disclosure includes: playing a target video in a first interface; presenting a target search entry in the first interface in response to receiving a request for pausing the target video; and presenting at least one commodity associated with the target video in a second interface based on a predetermined operation for the target search entry. Based on the above manner, the embodiments of the disclosure can automatically provide the commodity associated with the video by pausing the video by the user, thereby improving the interaction experience of the user.

## Description

This application claims priority to Chinese Patent Application No. 202310544844.1, filed on May 15, 2023, entitled "METHOD, APPARATUS, DEVICE AND STORAGE MEDIUM FOR COMMODITY SEARCHING", the entire content of which is incorporated herein by reference.

### FIELD

Example embodiments of the disclosure generally relate to the field of computers, and in particular, to a method, an apparatus, a device, and a computer-readable storage medium for commodity searching.

### BACKGROUND

With the development of computer technologies, various types of video content have become one of the main approaches for people to obtain content. For example, some creators may share some particular commodities by making video content. Therefore, for a viewer, how to more efficiently obtain commodity information recommended or involved in the video is the current focus of attention.

### SUMMARY

In a first aspect of the disclosure, a method of commodity searching is provided. The method includes: playing a target video in a first interface; presenting a target search entry in the first interface in response to receiving a request for pausing the target video; and presenting at least one commodity associated with the target video in a second interface based on a predetermined operation for the target search entry.

In a second aspect of the disclosure, an apparatus for commodity searching is provided. The apparatus includes a playing module configured to play a target video in a first interface; a presenting module configured to present a target search entry in the first interface in response to receiving a request to for pausing the target video; and a searching module configured to present at least one commodity associated with the target video in a second interface based on a predetermined operation for the target search entry.

In a third aspect of the disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the disclosure, a computer-readable storage medium is provided. The computer-readable storage medium has a computer program stored thereon, and the computer program is executable by a processor to implement the method of the first aspect.

It should be understood that the content described in this content section is not intended to limit the key features or major features of the embodiments of the disclosure, nor is it intended to limit the scope of the disclosure. Other features of the disclosure will become readily understood from the following description.

### BRIEF DESCRIPTION OF DRAWINGS

The above and other features, advantages, and aspects of various embodiments of the disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments according to the disclosure may be implemented;
FIGS. 2A-2C illustrate example interfaces according to some embodiments of the disclosure;
FIG. 3 illustrates a flowchart of an example process of commodity searching according to some embodiments of the disclosure;
FIG. 4 illustrates a schematic structural block diagram of an apparatus for commodity searching according to some embodiments of the disclosure; and
FIG. 5 illustrates a block diagram of an electronic device capable of implementing various embodiments of the disclosure.

### DETAILED DESCRIPTION

Embodiments of the disclosure will be described in more detail below with reference to the accompanying drawings. While certain embodiments of the disclosure are shown in the accompanying drawings, it should be understood that the disclosure may be implemented in various forms, and should not be construed as being limited to the embodiments set forth herein, but rather, these embodiments are provided for a more thorough and complete understanding of the disclosure. It should be understood that the drawings and embodiments of the disclosure are for illustrative purposes only and are not intended to limit the scope of the disclosure.

It should be noted that the title of any section / subsection provided herein is not limiting. Various embodiments are described throughout and any type of embodiments may be included in any section / subsection. Furthermore, the embodiments described in any section / subsection may be combined in any manner with any other embodiment described in the same section / subsection and / or different sections / subsections.

In the description of the embodiments of the disclosure, the terms "including" and the like should be understood to mean open-ended inclusion, i.e., "including but not limited to". The term "based on" should be understood as "based at least in part on". The terms "an embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

Embodiments of the disclosure may relate to data of a user, acquisition and / or use of data, and the like. These aspects all follow the corresponding laws and regulations and related regulations. In the embodiments of the disclosure, all data collection, acquisition, treatment, processing, forwarding, use and the like are performed on the premise that the user knows and confirms. Accordingly, when implementing the embodiments of the disclosure, the type, the usage scope, the usage scenario, and the like of the data or information that may be involved should be notified to the user and obtain the authorization from the user in an appropriate manner according to the relevant laws and regulations. The specific notification and / or authorization manner may vary according to actual situations and application scenarios, and the scope of the disclosure is not limited in this respect.

According to the solutions in the present specification and the embodiments, for example, personal information processing is involved, processing may be performed on the premise of having a legal basis (for example, obtaining consent of a personal information subject, or necessary for performing a fulfillment contract), and processing may be performed only within a specified or agreed range. In the case that the user refuses personal information other than necessary information required by the basic function, the use of the basic function will not be affected.

As mentioned briefly above, videos have become an important medium for commodity sharing. In some scenarios, if a producer of the video does not actively configure the commodity information related to the video, it is often difficult for the viewer of the video to obtain the commodity information associated with the video efficiently, which affects the commodity sharing capability of the video to some extent.

An embodiment of the disclosure provides a solution for commodity searching. According to the solution, the target video may be played in a first interface. Further, in response to receiving a request for pausing the target video, a target search entry may be presented in the first interface. Correspondingly, based on a predetermined operation for the target search entry, at least one commodity associated with the target video may be presented in a second interface.

In this way, the embodiments of the disclosure may provide the commodity associated with the video content based on a pause interaction of the user in the video playback scenario, thereby improving the user experience of obtaining a result of commodity searching.

Various example implementations of this solution are described in detail below in conjunction with the accompanying drawings.

### Example Environment

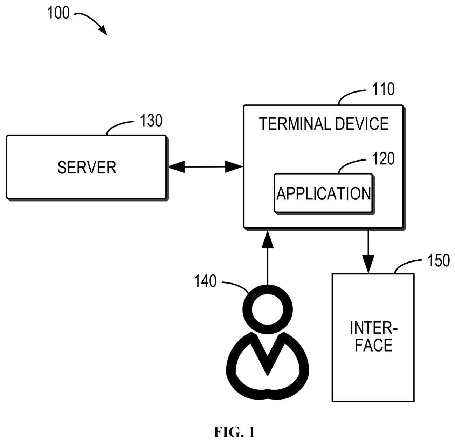

FIG. 1 illustrates a schematic diagram of an example environment 100 in which embodiments of the disclosure may be implemented. As shown in FIG. 1, the example environment 100 may include a terminal device 110.

In this example environment 100, an application 120 is installed in the terminal device 110. A user 140 may interact with the application 120 via the terminal device 110 and / or its attachment device. The application 120 may be a video application, a shopping application, or other suitable applications integrated with video services and / or shopping services. The disclosure is not limited in this regard.

In the environment 100 of FIG. 1, if the application 120 is in an active state, the application 120 may provide services such as video playing and / or commodity searching or purchasing for the user 140.

In addition, the terminal device 110 may present an interface 150 of the application 120. Depending on the specific business provided, the interaction behavior / predetermined operation of the user, etc., the content presented by the interface 150 may also be changed.

In some embodiments, the terminal device 110 communicates with a server 130 to enable provisioning of services to the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio / video player, a digital camera / camcorder, a positioning device, a television receiver, a radio broadcast receiver, an electronic book device, a gaming device, or any combination of the foregoing, including accessories and peripherals of these devices, or any combination thereof. In some embodiments, the terminal device 110 may also support any type of interface for a user (such as a "wearable" circuit, etc.).

The server 130 may be a standalone physical server, a distributed system or a server cluster composed of multiple physical servers, or may be a cloud server that provides basic cloud computing services such as cloud services, cloud databases, cloud computing, cloud functions, cloud storage, network services, cloud communications, middleware services, domain name services, security services, content distribution networks, and big data and artificial intelligence platforms. The server 130 may include, for example, a computing system / server, such as a mainframe, an edge computing node, a computing device in a cloud environment, or the like. The server 130 may provide a background service for an application 120 that supports content presentation in the terminal device 110.

A communication connection may be established between the server 130 and the electronic device 110. The communication connection may be established in a wired manner or a wireless manner. The communication connections may include, but are not limited to, Bluetooth connections, mobile network connections, universal serial bus connections, wireless fidelity connections, etc., the embodiments of the disclosure are not limited in this regard. In an embodiment of the disclosure, the server 130 and the electronic device 110 may implement signaling interaction through a communication connection between the server 130 and the electronic device 110.

It should be understood that the structures and functions of various elements in the environment 100 are described for illustrative purposes only and do not imply any limitation to the scope of the disclosure.

### Example Interface

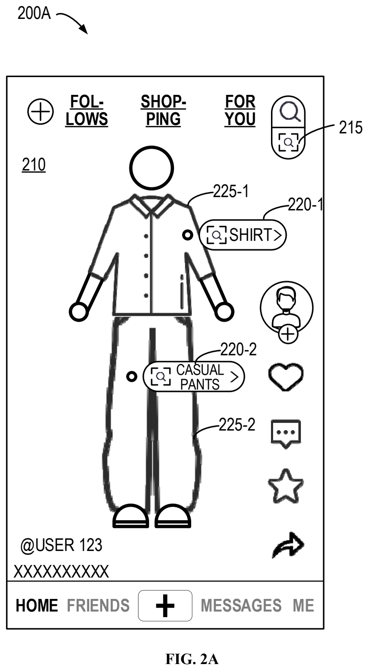

FIGS. 2A-2C illustrate example interfaces for commodity searching according to some embodiments of the disclosure.

As shown in FIG. 2A, FIG. 2A illustrates an example interface 200A according to some embodiments of the disclosure. The interface 200A may be provided, for example, by the electronic device 110 shown in FIG. 1.

In some examples, the interface 200A may correspond to a playback interface of a target video 210. For example, the electronic device 110 may provide an interface as shown in FIG. 2A upon receiving an access request of the target video 210.

In some other scenarios, the playback interface of the target video 210 may be different from a style shown in FIG. 2A. For example, the target video 210 may be played using a video player. The disclosure is not intended to be limited to a particular style of video playback.

In some embodiments, upon receiving a request for pausing the target video 210, the electronic device 110 may present at least one search entry in the interface 200A. Such a search entry may be used to search for a commodity corresponding to a video image when the target video 210 is paused.

In some embodiments, as shown in FIG. 2A, the electronic device 110 may present a search entry 215 at a predetermined position of the interface 200A when playing is paused. Such a search entry 215 may be used, for example, to perform commodity searching for a video image when the playing is paused.

In some embodiments, as shown in FIG. 2A, the electronic device 110 may further provide a target search entry corresponding to a commodity object in a video image of the target video 210 when paused. For example, the electronic device 110 may provide a search entry 220-1 corresponding to a commodity object 225-1 and / or provide a search entry 220-2 corresponding to a commodity object 225-2. The search entries 220-1 and 220-2 may be collectively referred to as search entries 220, and the commodity objects 225-1 and 225-2 may be collectively referred to as commodity objects 225.

In some embodiments, such a search entry 220 may also indicate at least one commodity information associated with the commodity object 225.

As an example, the search entry 220 may present category information of a commodity corresponding to the commodity object 225. For example, the commodity object in the video image may be detected by using an appropriate object detection technology, and the corresponding commodity category may be determined. Accordingly, such commodity category information, such as "shirt" or "casual pants", may be presented in the search entry 220.

In another example, the search entry 220 may also present identification information of the commodity corresponding to the commodity object 225, for example. Such identification information may include, for example, appropriate identification information such as a name, a brand, a model, and a manufacturer of the corresponding commodity.

In further example, the search entry 220 may also, for example, also present price information of the commodity corresponding to the commodity object 225. Such price information may include, for example, a price of the determined commodity, or a price range. Such price information may be determined, for example, based on one or more commodity entries matching the commodity object 225, and such a commodity entry may be determined based on the processes discussed below.

In some embodiments, the search entries 215 and 220 may also be presented based on a commodity sharing intent for a video image. For example, the search entry 215 and / or the search entry 220 may be presented accordingly when it is determined that the video image when the target video is paused has a corresponding commodity sharing intention.

It should be understood that whether the video image has the commodity sharing intention may be determined by using an appropriate intention detection technology. For example, when a commodity object is detected, it is determined that the video image has a commodity sharing intention.

In this way, the embodiments of the disclosure may provide a corresponding commodity search entry for the user when the video is paused, thereby improving the efficiency of obtaining the commodity information by the user.

Further, when receiving a predetermined operation for the search entry 215 and / or the search entry 220, the electronic device 110 may further present at least one commodity corresponding to the target video 210.

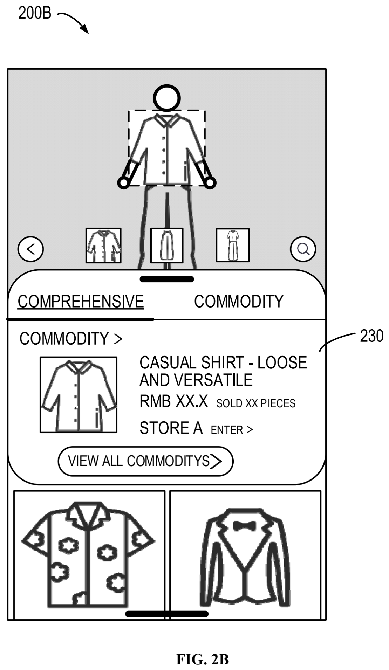

In some examples, the electronic device 110 presents the commodity associated with the target video 210, for example, in the interface 200B as shown in FIG. 2B. For example, the electronic device 110 may present, in the interface 200B, a commodity entry 230 corresponding to a target commodity object in the video image of the target video 210 when paused. Such a commodity entry 230 may be directed to a corresponding commodity interface for completing viewing or purchasing of the corresponding commodity, etc.

In some embodiments, when a matching degree between the target commodity object and a specific commodity entry reaches a threshold, the electronic device 110 may, for example, present the specific commodity entry 230 according to the style shown in FIG. 2B. For example, the electronic device 110 may present a unique specific commodity entry 230 through a commodity card, and the user may have access to other possible matching commodity entries by clicking on the "View All Commodities" option.

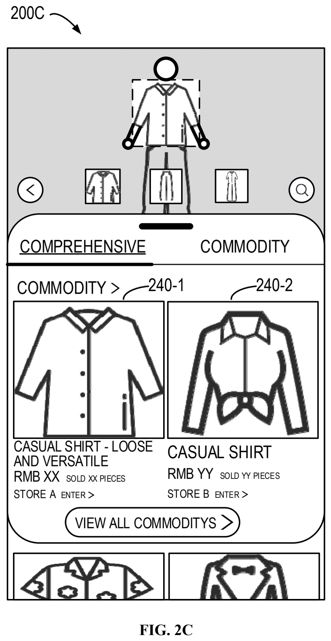

In another example, if in response to a matching degree between the target commodity object and any commodity entry is less than the threshold, the electronic device 110 may, for example, present the interface 200C shown in FIG. 2C. In the interface 200C, the electronic device 110 may present, for example, a set of candidate commodity entries 240-1 and 240-2 (individually or collectively referred to as commodity entries 240) associated with the target commodity object according to a second style. The second style as shown in FIG. 2C is different from the style shown in FIG. 2B.

In some embodiments, such a set of candidate commodity entries 240 is determined based on visual information of the target commodity object (e.g., visual information of a shirt in the picture). It should be understood that any suitable visual search technique may be employed to search for a set of candidate commodity entries 240, the disclosure is not intended to be limited thereto.

In some embodiments, the matching degree between the target commodity object and the commodity entry may be determined by an appropriate electronic device, such as the electronic device 110, the server 130, and / or a combination thereof as shown in FIG. 1.

In some embodiments, the electronic device 110 and / or the server 130 may determine the matching degree between the target commodity object and the commodity entry based on at least one of the following information: the video image, video content of the target video, description information of the target video, comment information of the target video, or the like.

For example, the electronic device 110 and / or the server 130 may determine whether a target commodity entry with a matching degree greater than the threshold exists in the commodity library according to the video image of the target video when the target video is paused.

As another example, the electronic device 110 and / or the server 130 may also consider other video content portions of the target video to determine the matching degree between the commodity object and a commodity entry in the commodity library, for example, based on visual content and / or audio content of the target video.

As another example, the electronic device 110 and / or the server 130 may also obtain video description item information of the target video 210, for example. Such video description information may include, for example, a title, a classification, etc. of the video. Further, the electronic device 110 and / or the server 130 may determine, according to the video description information, whether it corresponds to a specific commodity entry.

As still another example, the electronic device 110 and / or the server 130 may also obtain specific comment information of the target video 210. For example, the electronic device 110 and / or the server 130 may obtain video comment information posted by an uploading party or a producer of the target video 210 to determine whether it corresponds to a specific commodity entry.

In some embodiments, when the commodity entry uniquely matched with the target commodity object may be determined based on one or more of the above information, the electronic device 110 may present the interface 200B as shown in FIG. 2B to provide the matched commodity entry through a first style.

Based on such a mode, the embodiment of the disclosure can further improve the commodity information sharing efficiency, and facilitate the user to more conveniently access related commodities.

### Example Process

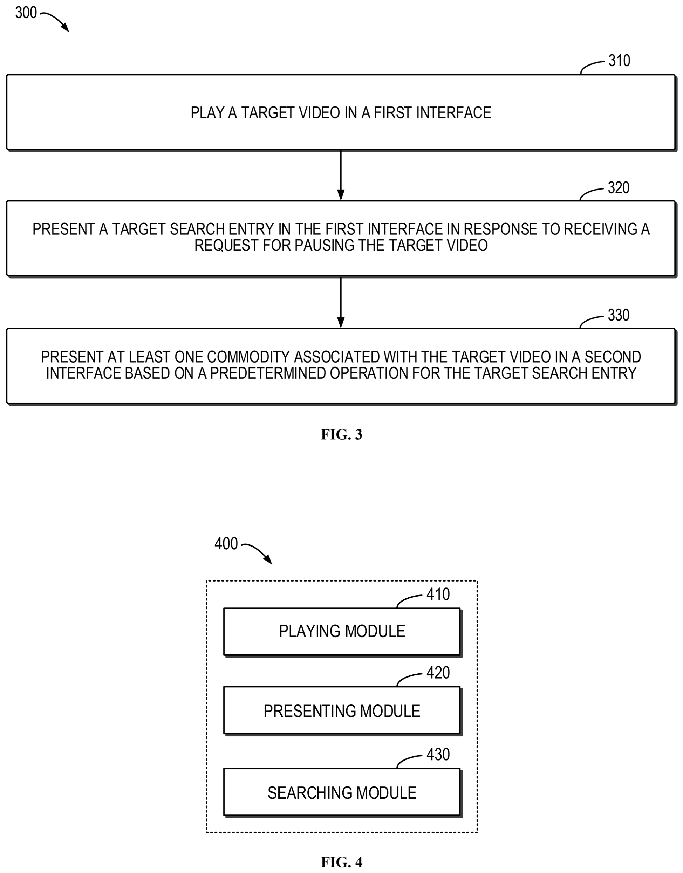

FIG. 3 illustrates a flowchart of an example process 300 for commodity searching according to some embodiments of the disclosure. The process 300 may be implemented at the electronic device 110. The process 300 is described below with reference to FIG. 1.

As shown in FIG. 3, at block 310, the electronic device 110 plays a target video in a first interface.

At block 320, the electronic device 110 presents a target search entry in the first interface in response to receiving a request for pausing the target video.

At block 330, the electronic device 110 presents at least one commodity associated with the target video in the second interface based on a predetermined operation for the target search entry.

In some embodiments, the at least one commodity is determined based on a video image of the target video when paused.

In some embodiments, presenting the target search entry in the first interface includes: providing the target search entry corresponding to a commodity object in a video image of the target video when paused.

In some embodiments, the target search entry indicates at least one commodity information associated with the commodity object.

In some embodiments, the at least one piece of commodity information includes category information of a commodity corresponding to the commodity object, identification information of the commodity corresponding to the commodity object, and / or price information of the commodity corresponding to the commodity object.

In some embodiments, presenting the target search entry in the first interface includes: providing the target search entry at a predetermined position in the first interface.

In some embodiments, presenting the at least one commodity associated with the target video in the second interface includes: presenting, in the second interface, at least one commodity entry corresponding to a target commodity object in the video image of the target video when paused.

In some embodiments, presenting the at least one commodity entry in the second interface includes: presenting, in the second interface, a target commodity entry in a first style, in response to a matching degree between the target commodity object and the target commodity entry reaching a threshold.

In some embodiments, presenting the at least one commodity entry in the second interface further includes: presenting, in the second interface, a set of candidate commodity entries associated with the target commodity object in a second style in response to a matching degree between the target commodity object and any commodity entry being less than the threshold, the set of candidate commodity entries determined based on visual information of the target commodity object.

In some embodiments, the matching degree is determined based on at least one of the following information: the video image, video content of the target video, description information of the target video, and comment information of the target video.

### Example Apparatus and Device

Embodiments of the disclosure also provide a corresponding apparatus for implementing the above method or process.

FIG. 4 illustrates a schematic structural block diagram of an apparatus 400 for commodity searching according to some embodiments of the disclosure. The apparatus 400 may be implemented or included in the electronic device 110. Various modules / components in the apparatus 400 may be implemented by hardware, software, firmware, or any combination thereof.

The apparatus 400 includes a playing module 410 configured to play a target video in a first interface; a presenting module 420 configured to present a target search entry in the first interface in response to receiving a request for pausing the target video; and a searching module 430 configured to present at least one commodity associated with the target video in a second interface.

In some embodiments, the at least one commodity is determined based on a video image of the target video when paused.

In some embodiments, the presenting module 420 is further configured to provide the target search entry corresponding to a commodity object in a video image of the target video when paused.

In some embodiments, the target search entry indicates at least one commodity information associated with the commodity object.

In some embodiments, the at least one commodity information includes: category information of a commodity corresponding to the commodity object, identification information of the commodity corresponding to the commodity object, and / or price information of the commodity corresponding to the commodity object.

In some embodiments, the presenting module 420 is further configured to provide the target search entry at a predetermined position in the first interface.

In some embodiments, the searching module 430 is further configured to present, in the second interface, at least one commodity entry corresponding to a target commodity object in the video image of the target video when paused.

In some embodiments, the searching module 430 is further configured to: present, in the second interface, a target commodity entry in a first pattern in response to a matching degree between the target commodity object and the target commodity entry reaching a threshold.

In some embodiments, the searching module 430 is further configured to: present, in the second interface, a set of candidate commodity entries associated with the target commodity object in a second style in response to a matching degree between the target commodity object and any commodity entry being less than a threshold, the set of candidate commodity entries determined based on visual information of the target commodity object.

In some embodiments, the matching degree is determined based on at least one of the following information:
the video image, video content of the target video, description information of the target video, and comment information of the target video.

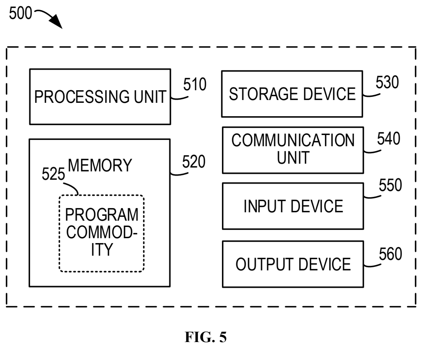

FIG. 5 illustrates a block diagram of an electronic device 500 in which one or more embodiments of the disclosure may be implemented. It should be understood that the electronic device 500 illustrated in FIG. 5 is merely illustrative and should not constitute any limitation on the functionality and scope of the embodiments described herein. The electronic device 500 shown in FIG. 5 may be configured to implement the electronic device 110 in FIG. 1.

As shown in FIG. 5, the electronic device 500 is in the form of a general-purpose electronic device. Components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and capable of performing various processes according to programs stored in the memory 520. In a multiprocessor system, a plurality of processing units executes computer-executable instructions in parallel to improve the parallel processing capability of the electronic device 500.

Electronic device 500 generally includes a plurality of computer storage media. Such media may be any available media that is accessible by the electronic device 500, including, but not limited to, volatile and non-volatile media, removable and non-removable media. The memory 520 may be a volatile memory (e.g., a register, a cache, a random access memory (RAM)), a non-volatile memory (e.g., a read-only memory (ROM), an electrically erasable programmable read-only memory (EEPROM), a flash memory), or some combination thereof. The storage device 530 may be a removable or non-removable medium and may include a machine-readable medium, such as a flash drive, magnetic disk, or any other medium, which may be capable of storing information and / or data (e.g., training data for training) and may be accessed within the electronic device 500.

The electronic device 500 may further include additional removable / non-removable, volatile / non-volatile storage media. Although not shown in FIG. 5, a disk drive for reading from or writing into a removable, nonvolatile magnetic disk (e.g., a "floppy disk") and an optical disk drive for reading from or writing into a removable, nonvolatile optical disk may be provided. In these cases, each drive may be connected to a bus (not shown) by one or more data media interfaces. The memory 520 may include a computer program product 525 having one or more program modules configured to perform various methods or actions of various embodiments of the disclosure.

The communication unit 540 is configured to communicate with another electronic device through a communication medium. Additionally, the functionality of components of the electronic device 500 may be implemented in a single computing cluster or multiple computing machines capable of communicating through a communication connection. Thus, the electronic device 500 may operate in a networked environment using logical connections with one or more other servers, a network personal computer (PC), or another network node.

The input device 550 may be one or more input devices, such as a mouse, a keyboard, a trackball, or the like. The output device 560 may be one or more output devices, such as a display, a speaker, a printer, or the like. The electronic device 500 may also communicate with one or more external devices (not shown) through the communication unit 540 as needed, the external device such as a storage device, a display device, etc., communicates with one or more devices that enable the user to interact with the electronic device 500, or communicates with any device (e.g., a network card, a modem, etc.) that enables the electronic device 500 to communicate with one or more other electronic devices. Such communication may be performed via an input / output (I / O) interface (not shown).

According to example implementations of the disclosure, there is provided a computer-readable storage medium having computer-executable instructions stored thereon, wherein the computer-executable instructions are executed by a processor to implement the method described above. According to example implementations of the disclosure, a computer program product is further provided, the computer program product being tangibly stored on a non-transitory computer-readable medium and including computer-executable instructions, and the computer-executable instructions being executed by the processor to implement the method described above.

Aspects of the disclosure are described herein with reference to flowcharts and / or block diagrams of a method, an apparatus, a device, and a computer program product implemented in accordance with the disclosure. It should be understood that each block of the flowchart and / or block diagram, and combinations of blocks in the flowchart(s) and / or block diagram(s), may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions / acts specified in one or more blocks in the flowchart(s) and / or block diagram(s). These computer-readable program instructions may also be stored in a computer-readable storage medium that cause the computer, programmable data processing apparatus, and / or other devices to function in a particular manner, such that the computer-readable medium storing instructions includes an article of manufacture including instructions to implement aspects of the functions / acts specified in one or more blocks in the flowchart(s) and / or block diagram(s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on the computer, other programmable data processing apparatus, or other apparatus implement the functions / acts specified in one or more blocks in the flowchart(s) and / or block diagram(s).

The flowchart and block diagrams in the figures show an architecture, functionality, and operation that may be possibly implemented by a system, a method, and a computer program product according to various implementations of the disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagram(s) and / or flowchart(s), as well as combinations of blocks in the block diagram(s) and / or flowchart(s), may be implemented with a dedicated hardware-based system that performs the specified functions or actions, or may be implemented in a combination of dedicated hardware and computer instructions.

Various implementations of the disclosure have been described above, which are illustrative, not exhaustive, and are not limited to the implementations disclosed. Many modifications and variations will be apparent to those of ordinary skill in the art without departing from the scope and spirit of various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method of commodity searching, comprising:
playing a target video in a first interface;
presenting a target search entry in the first interface in response to receiving a request for pausing the target video; and
presenting at least one commodity associated with the target video in a second interface based on a predetermined operation for the target search entry.

2. The method of claim 1, wherein the at least one commodity is determined based on a video image of the target video when paused.

3. The method of claim 1, wherein presenting the target search entry in the first interface comprises:
providing the target search entry corresponding to a commodity object in a video image of the target video when paused.

4. The method of claim 3, wherein the target search entry indicates at least one commodity information associated with the commodity object.

5. The method of claim 4, wherein the at least one commodity information comprises:
category information of a commodity corresponding to the commodity object,
identification information of the commodity corresponding to the commodity object, and / or
price information of the commodity corresponding to the commodity object.

6. The method of claim 1, wherein presenting the target search entry in the first interface comprises:
providing the target search entry at a predetermined position in the first interface.

7. The method of claim 1, wherein presenting the at least one commodity associated with the target video in the second interface comprises:
presenting, in the second interface, at least one commodity entry corresponding to a target commodity object in the video image of the target video when paused.

8. The method of claim 7, wherein presenting the at least one commodity entry in the second interface comprises:
presenting, in the second interface, a target commodity entry in a first style in response to a matching degree between the target commodity object and the target commodity entry reaching a threshold.

9. The method of claim 8, wherein presenting the at least one commodity entry in the second interface further comprises:
presenting, in the second interface, a set of candidate commodity entries associated with the target commodity object in a second style in response to a matching degree between the target commodity object and any commodity entry being less than the threshold, the set of candidate commodity entries determined based on visual information of the target commodity object.

10. The method of claim 8 or 9, wherein the matching degree is determined based on at least one of:
the video image,
video content of the target video,
description information of the target video,
comment information of the target video.

11. An apparatus for commodity searching, comprising:
a playing module configured to play a target video in a first interface;
a presenting module configured to present a target search entry in the first interface in response to receiving a request for pausing the target video; and
a searching module configured to present at least one commodity associated with the target video in a second interface based on a predetermined operation for the target search entry.

12. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 10.

13. A computer-readable storage medium having stored thereon a computer program executable by a processor to implement the method of any of claims 1 to 10.
